Europäisches Patentamt

European Patent Office

Office européen des brevets

(11) Publication number: **0 060 137**
**A1**

## (12) EUROPEAN PATENT APPLICATION

(21) Application number: 82301196.0

(22) Date of filing: 09.03.82

(51) Int. Cl.³: **B 65 G 53/12**
**F 23 K 3/02**

(30) Priority: 10.03.81 GB 8107488

(43) Date of publication of application:
15.09.82 Bulletin 82/37

(84) Designated Contracting States:
AT BE CH DE FR GB IT LI LU NL SE

(71) Applicant: MACAWBER ENGINEERING LIMITED
Shaw Lane Industrial Estate, Doncaster
South Yorkshire DN 4SE(GB)

(72) Inventor: Snowdon, Brain
14, Airedale Avenue Tickhill
Doncaster South Yorkshire(GB)

(74) Representative: Geldard, David Guthrie et al,
URQUHART-DYKES AND LORD 11th Floor, Tower
House Merrion Way
Leeds, LS2 8PB West Yorkshire(GB)

(54) Conveying systems.

(57) Apparatus for feeding granular or particulate material to a conveying pipe includes a closable container (3) for holding the material, means (19) for delivering material from the container into the pipe (29), means (31, 33, 35) for supplying fluid to move material along the pipe and fluid interconnecting means (27) between the pipe and the container to maintain substantially the same fluid pressure within the container and the pipe.

A system for feeding material to, for instance, a blast furnace or boiler may include a plurality of such items of apparatus and means for adjusting the flow rate of material from each item of apparatus into the blast furnace or boiler without affecting the flow from the other items of apparatus.

FIG.1

EP 0 060 137 A1

Croydon Printing Company Ltd.

- 1 -

CONVEYING SYSTEMS

This invention relates to conveying systems and in particular to systems for feeding granular or particulate material from a container into a conveying conduit.

The present invention is of use where it is required to deliver particulate or granular material at an accurate and adjustable rate from a source of material into a pipeline. By way of example, there is such a requirement in the feeding of coal, for instance, powdered coal, to blast furnaces, boilers or kilns.

It is necessary to feed coal at very accurate feed rates to a number of points on the furnace or boiler. The coal is usually dry and pulverised although it may be damp. Typically the pressure in a blast furnace is about 3 bar whereas in a boiler it is usually much lower. Variation in pressure at the point of burning must not affect the material flow rate.

According to the present invention there is provided apparatus for feeding granular or particulate material to a conveying pipe, the apparatus comprising a closable container for holding said material, means for delivering material from the container into the pipe, means for supplying fluid to move the material along the pipe, and fluid interconnecting means between the pipe and the container to maintain substantially the same fluid pressure within the container and the pipe.

Preferably the apparatus forms part of a pneumatic conveying system.

Preferably the means for delivering material from the container into the pipe include a screw feeder.

A system for feeding material to, for instance, a blast furnace or boiler may include a plurality of pieces of apparatus in accordance with the present invention and the flow rate of material is adjustable to each feed point into the blast furnace or boiler without affecting flow to the other feed points.

The present invention also provides a method for feeding granular or particulate material to a conveying pipe, the method comprising feeding material to a closable container, delivering material from the container into the pipe, supplying fluid to move the material along the pipe, and, during said delivery of material to the pipe and movement of material along the pipe, maintaining substantially the same fluid pressure within the container and the pipe.

The present invention will now be described, by way of examples only, and with reference to the accompanying drawings, in which:-

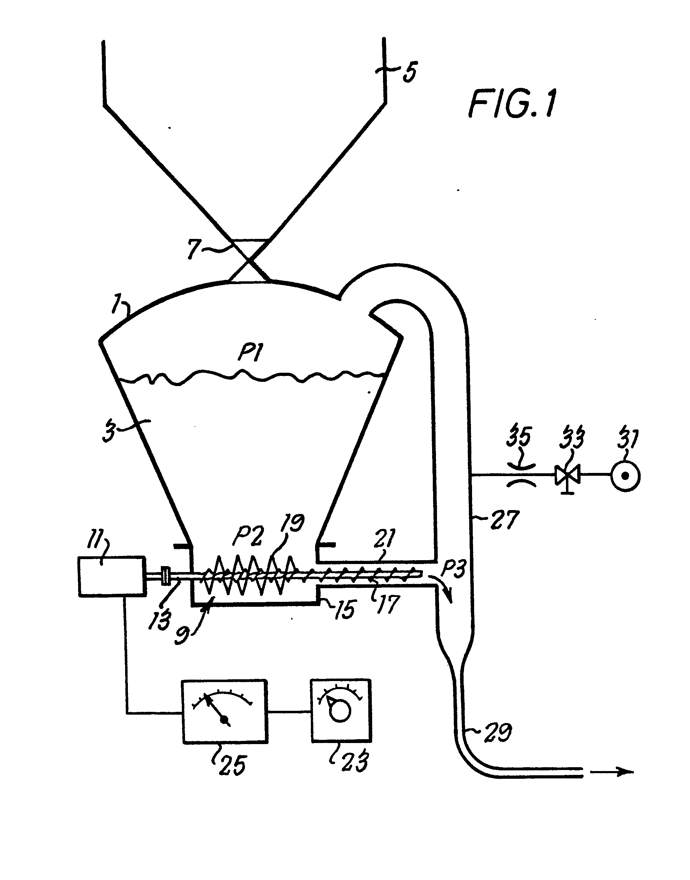

Figures 1, 2 and 3 are diagrammatic representations of apparatus in accordance with the present invention.

Referring to Figure 1 of the accompanying drawings, a container in the form of a pressure vessel 1 is loaded with pulverised coal 3 from a feed hopper 5 via an inlet valve 7. The inlet 7 is such that, when closed, it seals pressure vessel 1 from the feed hopper and may, for instance, be of a type as described in the specification of our Patent No. 1,539,079.

Attached to the lower end of pressure vessel 1 is a feed unit 9. Feed unit 9 includes a variable speed motor 11 with a drive shaft 13 extending into a housing 15 attached to the bottom of pressure vessel 1. Within housing 15, shaft 13 turns an inner helical screw member 17 and, circumferentially surrounding inner screw member 17 an outer axially shorter screw member 19. The latter extends axially only across the bottom of pressure vessel 1 whereas the inner screw member extends beyond the bottom of pressure vessel 1 within conduit 21 substantially to the end of said conduit.

The speed of the motor is controlled by controller 23 and can be monitored by means of speed rate display device 25.

At its end conduit 21 is attached to the lower region of an upwardly extending balance pipe 27. Below conduit 21 balance pipe 27 narrows in diameter to a delivery pipe 29. Above conduit 21 balance pipe 27 extends upwardly to the level of and into communication with the top of pressure vessel 1.

Air from source 31 may be fed via air supply valve 33 and air flow controller 35 to balance pipe 27 at a position above conduit 21.

The feed unit 9 has a screw speed which is accurately adjustable so that it is capable of delivering material into balance pipe 27 at a predetermined rate which in volumetric terms is accurate to ±2% or better. However, such accuracy can only be maintained by ensuring the balancing of fluid pressure in the pipe and in the pressure vessel above the feed unit and this is ensured by the use of a balance pipe, as described above.

In operation inlet valve 7 is opened and material fed from feed hopper 5 into pressure vessel 3. Inlet valve 7 is then closed and air is supplied from source 31 to balance pipe 27. The motor 11 is started so that the inner and outer screws 17 and 19 of the feed unit are caused to rotate. Outer screw 19 compacts material into the region of inner screw 17 and the latter causes material to be moved along conduit 21 and into balance pipe 27. In balance pipe 27 the material mixes with the pressurised air and a material/air mixture passes into narrower pipe 29 and hence to a delivery point such as a blast furnace. When vessel 3 is empty valve 33 is closed, valve 7 opened and the whole process repeated. Variable speed motor 11 is adjusted to give the desired feed rate. The conveying of material along pipe 29 is dilute phase with a continuous stream of material being carried along by the air.

The pressures P1, P2 and P3 (as indicated in Figure 1) are maintained in balance (the pressure is the same at all three positions), thereby ensuring that any change in pressure at the point of delivery will not affect the rate of the feed of material.

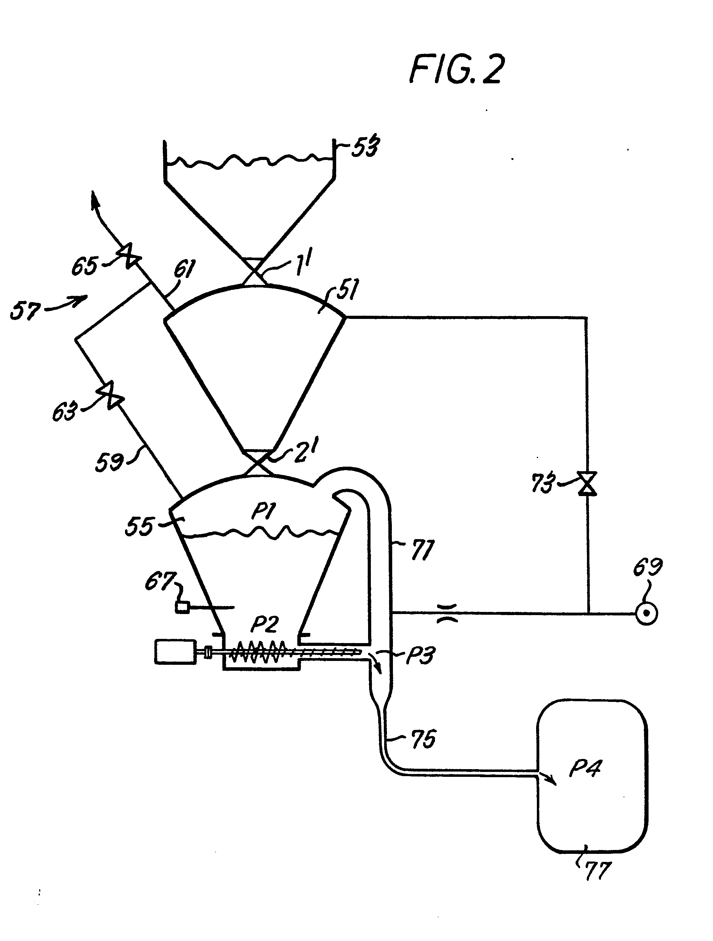

Referring to Figure 2, a second embodiment of apparatus in accordance with the present invention is similar to that described with reference to Figure 1 except that a second pressure vessel 51 is incorporated between feed hopper 53 and lower pressure vessel 55. Vessel 51 acts as a lock vessel and the provision of the venting arrangement 57, pipes 59 and 61 and valves 63 and 65 enables a continuous head of material to be maintained in lower vessel 55. The latter is equipped with a low level probe 67 to detect the point at which further material should be loaded into vessel 55. Pressurised air from source 69 can be fed not only to balance pipe 71 but also into lock vessel 51 via valve 73. As before, material fed into balance pipe 71 may be conveyed along narrow pipe 75 to a point of delivery which may be a blast furnace 77 at a pressure

P4 which is different to pressure P1, the latter being equal to pressures P2 and P3.

The sequence of operations is as follows. When the level of material in vessel 55 falls below the level of probe 67, valve 73 is opened and air fed to lock vessel 51 until the pressure therein is the same as pressure P1 in vessel 55. Valve 2 is then opened and vessel 55 filled with material. Valve 2 is then closed and the pressure in lock vessel 51 vented off through pipe 61 and valve 65. Valve 1 is then opened and material allowed to fall from feed hopper 53 into lock vessel 51. Valve 1 is then closed and the cycle is completed.

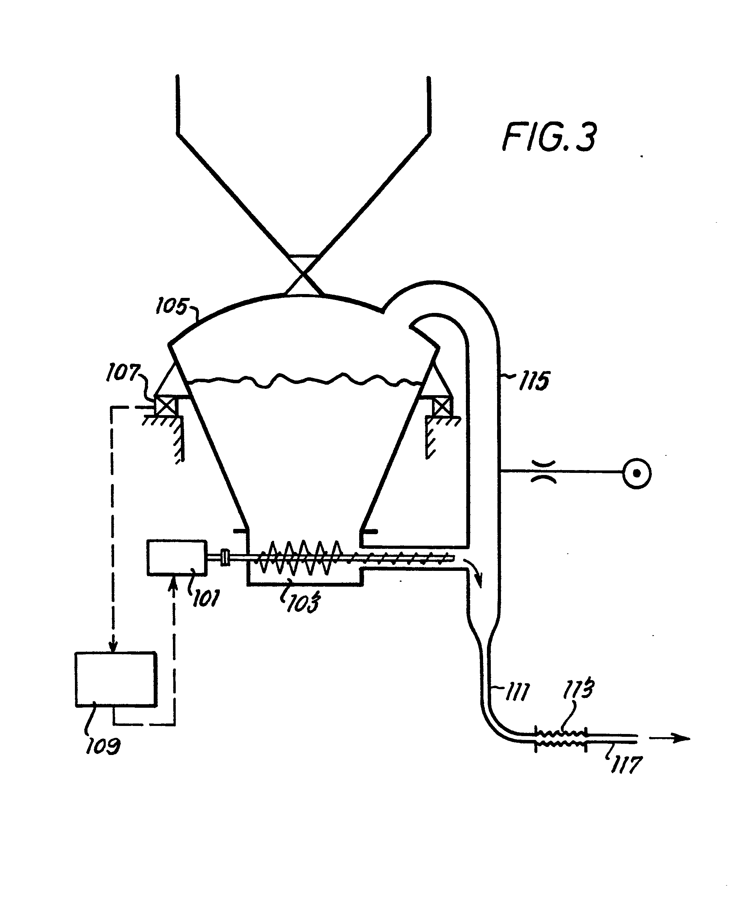

Referring to Figure 3, a third embodiment of apparatus in accordance with the present invention is similar to that shown in Figure 1 except that the apparatus is provided with a feedback control loop arrangement in which the feed rate is determined by a "loss in weight" rate weighing system which constantly adjusts the speed of drive motor 101 of feed unit 103 in order to give the desired weight rate of material feed. As described above, the arrangements shown in Figures 1 and 2 are volumetrically determined feed systems.

Pressure vessel 105 is mounted on load cells 107 so that signals corresponding to the weight or decrease in weight of vessel 105 can be fed via feeding rate indicator 109 to drive motor 101 in order to adjust the speed of the latter.

Narrow pipe 111 includes a portion 113 which is flexible, thereby allowing the isolation of vessel 105 and associated pipework such as balance pipe 115 from pipework 117, on the other side of flexible portion 113, in order to ensure accurate weighing.

For any of the three above-described embodiments
a plurality of the systems as described may be provided
in order to feed pulverised coal to a deliver point
such as a blast furnace.

CLAIMS:

1. Apparatus for feeding granular or particulate material to a conveying pipe characterised in that the apparatus comprises a closable container for holding said material, means for delivering material from the container into the pipe, means for supplying fluid to move the material along the pipe, and fluid interconnecting means between the pipe and the container to maintain substantially the same fluid pressure within the container and the pipe.

2. Apparatus according to claim 1 characterised in that the apparatus forms part of a pneumatic conveying system.

3. Apparatus according to claim 1 or claim 2 characterised in that the means for delivering material from the container into the pipe include a screw feeder.

4. A system for feeding material to a destination characterised in that the system includes a plurality of items of apparatus as claimed in any of the preceding claims and in that means are provided to adjust the flow rate of material from one said item of apparatus without affecting flow from the or each other said item of apparatus.

5. A method for feeding granular or particulate material to a conveying pipe characterised in that the method comprises feeding material to a closable container, delivering material from the container into the pipe, supplying fluid to move material along the pipe and, during said delivery of material to the pipe and movement of material along the pipe, maintaining substantially the same fluid pressure within the container and the pipe.

0060137

FIG.1

FIG.2

0060137

FIG.3

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A- 399 730 (PETERS) <br> *The whole document* <br><br> --- | 1-3,5 | B 65 G 53/12 <br> F 23 K 3/02 |
| X | DE-A-2 000 278 (RATZEL) <br> *Page 4, lines 14-27; page 5, lines 1-12; page 7, lines 1-11; figures* & GBA 1315941 <br><br> ----- | 1-5 | |

TECHNICAL FIELDS SEARCHED (Int. Cl. ³)

B 65 G
F 23 K

The present search report has been drawn up for all claims

| Place of search <br> THE HAGUE | Date of completion of the search <br> 19-05-1982 | Examiner <br> OSTYN T.J.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82